# EUROPÄISCHE PATENTSCHRIFT

(11) **EP 3 082 640 B1**
(45) Veröffentlichungstag und Bekanntmachung des Hinweises auf die Patenterteilung: **17.06.2020**
(21) Anmeldenummer: 14830508.9
(22) Anmeldetag: 16.12.2014
(51) Int. Cl.: A61C 8/00

(54) **ENOSSALES EINZELZAHNIMPLANTAT**
ENOSSAL SINGLE TOOTH IMPLANT
IMPLANT DENTAIRE INDIVIDUEL PLACÉ À L'INTÉRIEUR D'UN OS

(30) Priorität: 17.12.2013 DE 102013114170
(43) Veröffentlichungstag der Anmeldung: 26.10.2016
(73) Patentinhaber: Nobel Biocare Services AG, 8302 Kloten (CH)
(72) Erfinder: DÜRR, Walter, 75196 Remchingen (DE)
(74) Vertreter: Nobbe, Matthias
(86) Internationale Anmeldenummer: PCT/DE2014/100449
(87) Internationale Veröffentlichungsnummer: WO 2015/090280

(56) Entgegenhaltungen:
- WO-A1-98/52488
- WO-A1-2008/016205
- DE-U1-202012 103 424
- US-A1- 2013 004 915

## Beschreibung

Die Erfindung betrifft ein Einzelzahnimplantat für einen festsitzenden Zahnersatz mit den Merkmalen des Patentanspruches 1.

Bei einem Einzelzahnimplantat, wie es aus der DE 40 28 855 C2 bekannt und auch Gegenstand der DE 195 09 762.9-32 ist, erfolgt die Verdrehsicherung in der Weise, dass die Grundkörper-Formschlusselemente am Boden der Ringausnehmung des Grundkörpers und die Distanzhülsen-Formschlusselemente, die hierzu komplementär sind, am Stirnrand des Zentrierbundes der Distanzhülse vorgesehen sind. Fertigungstechnisch sind derartige Formschlusselemente nur verhältnismäßig schwierig herzustellen, wobei es ferner in manchen Anwendungsfällen nicht sonderlich günstig ist, dass nicht die volle Tiefe der Ringausnehmung bzw. des Zentrierbundes zum Zentrieren, Fixieren und Sichern der Distanzhülse relativ zum Grundkörper zur Verfügung steht.
WO98/52488 offenbart ein Einzelzahnimplantat.
Auch bei einem anderen Dentalimplantat, wie es aus der DE 37 35 378 vorgesehen ist, treten Schwierigkeiten ähnlicher Art auf, die darauf beruhen, dass auch dort die Formschlusselemente des Grundkörpers mit Abstand von dessen koronalen Stirnrand innerhalb einer Blindbohrung des Grundkörpers liegen.

Aus der DE 41 27 839 A1 ist ein Implantat-Grundkörper bekannt, dessen zentrale Ringausnehmung ein Formschlusselement aufweist, welches sich unmittelbar an den koronalen Stirnrand des Grundkörpers anschließt, wobei das Formschlusselement nutenförmig gestaltet ist und das in dem Grundkörper einzusetzende Halteteil eine dazu komplementäre Gestaltung aufweist. Ein gesonderter Implantatpfosten ist dabei nicht vorgesehen.

Aus der DE 195 34 979 C1 ist ein Einzelzahnimplantat bekannt, bei dem die Formschlusselemente des Grundkörpers unmittelbar im Anschluss an dessen koronalen Stirnrand mit entsprechender Anordnung und Ausbildung der hierzu komplementären Abutment-Formschlusselemente angeordnet sind. Dadurch, dass die gesamte Tiefe der Ringausnehmung des Grundkörpers für die Zentrierung und Führung des Abutments zur Verfügung steht, soll sich eine deutlich verbesserte Stabilität der Verbindung zwischen Distanzhülse und Grundkörper bei einem größeren Gestaltungsspielraum in der Art der Teilung sowie der Formgebung der Formschlusselemente ergeben.

Aus der WO 2013083125 ist ein enossales Einzelzahnimplantat für einen festsitzenden Zahnersatz bekannt, das einen Grundkörper mit einer Ringausnehmung mit einem Formschlussabschnitt, einem in die Ausnehmung des Grundkörpers einsetzbaren Abutment aufweist, wobei zueinander komplementäre Formschlusselemente an Grundkörper und Abutment vorgesehen und in Form einer Vaterteil-Mutterteil-Verbindung ausgebildet sind.

Obwohl insbesondere das aus der vorgenannten WO 2013083125 bekannte enossale Einzelzahnimplantat bereits eine sehr gute Verdrehsicherung bereitstellt, bildet die vorliegende Erfindung dieses im Stand der Technik bekannte Implantat dahingehend weiter, dass bei gleichbleibender Führung und Zentrierung des Abutments im Grundkörper und vereinfachter Herstellung ein besonders sicheres Eindrehen des Grundkörpers in den Kiefer auch bei schwierigen Bedingungen für den Implantologen gewährleistet ist.

Erfindungsgemäß wird diese Aufgabe in Weiterbildung des gattungsgemäßen enossalen Einzelzahnimplantates durch die Kombination der Merkmale des Patentanspruches 1 gelöst. Besondere Ausführungsformen der Erfindung sind Gegenstand der Unteransprüche.

Das erfindungsgemäße Einzelzahnimplantat umfasst somit einen Grundkörper, ein in den Grundkörper einsetzbares Abutment sowie eine den Grundkörper und das Abutment durchdringende Halteschraube, die die Position des Abutments gegenüber dem Grundkörper festlegt und in einen am apikalen Ende des Grundkörpers vorgesehenen Gewindeabschnitt eingeschraubt ist, auf.

Der Grundkörper weist dabei eine Ringausnehmung auf, in die das Abutment einsetzbar ist. Die Ringausnehmung umfasst einen Führungsabschnitt am apikalen Ende der Ringausnehmung, einen Formschlussabschnitt, der zylindrisch oder konisch ausgebildet sein kann, und einen koronalen Endabschnitt, an die entsprechende Abschnitte des Abutments größenmäßig komplementär angepasst sind.

Um ein sicheres Eindrehen des Grundkörpers in den Kiefer des Patienten zu ermöglichen, bei dem auch bei nicht genau angepassten Durchmesser oder Winkel der Bohrung im Kiefer ein ausreichendes Drehmoment auf den Grundkörper aufgebracht werden kann, sind in einem der drei Abschnitte des Grundkörpers zusätzlich zu den Formschlusselementen im Formschlussabschnitt Formschlusseindrehelemente, im Folgenden kurz Eindrehelemente genannt, vorgesehen, die nach Einsetzen des Eindrehwerkzeuges, wie einem Eindrehbit mit angepasstem Werkzeugkopf, den Formschluss zwischen Eindrehelement am Grundkörper und Eindrehelement am Eindrehwerkzeug, beispielsweise nach Art einer Vaterteil-Mutterteil-Verbindung, ergeben und so ein Eindrehen des Grundkörpers in den Kiefer ermöglichen.

Nach Eindrehen des Grundkörpers in den Kiefer und Abziehen des Eindrehwerkzeuges ist das Abutment ausrichtbar in den Grundkörper einsetzbar, wobei die Formschlusselemente an Grundkörper und Abutment, mindestens ein Paar in Form einer Vaterteil-Mutterteil-Verbindung, miteinander in Eingriff gebracht werden können und dabei Grundkörper und Abutment zueinander festlegen. Anschließend werden Grundkörper und Abutment über die Halteschraube in der zueinander relativen Position fixiert.

Somit lässt sich der Grundkörper aufgrund seiner erfindungsgemäßen Gestaltung mit den Eindrehelementen mittels eines an den Eindrehelementen eingreifenden Werkzeuges mit gegenüber den Ausführungen aus dem Stand der Technik erhöhtem Drehmoment in den Kieferknochen einschrauben. Obgleich die Eindrehelemente in jedem der drei Abschnitte (Zentrier-/Führungsabschnitt am apikalen Ende der Ringausnehmung, dem Formschlussabschnitt und dem koronalen Endabschnitt) vorgesehen sein können, sind die Eindrehelemente bevorzugt im Formschlussabschnitt, der zylindrisch oder konisch ausgebildet sein kann, zwischen dem apikalen Führungsabschnitt und dem koronalen Endabschnitt angeordnet. Ein konischer Formschlussabschnitt vergrößert den Durchmesser des Führungsabschnittes auf den Durchmesser des Endabschnittes und ist am Grundkörper hohlkegelstumpfartig ausgebildet, dem ein Kegelstumpf am Abutment korrespondiert. Grundsätzlich kann der Formschlussabschnitt am Grundkörper auch hohlzylindrisch ausgebildet sein, wobei dann das mindestens eine Formschlusselement und das mindestens eine Eindrehelement auf verschiedenen Ebenen liegen können.

Im Bereich des Formschlussabschnittes sind die Eindrehelemente/ Eindrehelemente am Grundkörper in Umfangsrichtung bevorzugt zwischen Formschlusselementen am Grundkörper, die mit den Formschlusselementen am Abutment in Eingriff bringbar sind, und bevorzugt alternierend angeordnet. Die Eindrehelemente sind dann bevorzugt so gestaltet, dass bei eingesetztem Eindrehwerkzeug nur ein Formschluss zwischen den Eindrehelementen am Grundkörper und Eindrehwerkzeug gegeben ist, so dass die Formschlusselemente am Grundkörper nicht durch das Eindrehwerkzeug beschädigt werden können. Entsprechend sind bei dieser Ausführungsform die Formschlusselemente am Abutment und die Eindrehelemente am Grundkörper so ausgebildet, dass bei eingesetztem Abutment zwischen den Formschlusselementen am Abutment und den Eindrehelementen am Grundkörper kein Kontakt und somit keine Beschädigung der Formschlusselemente am Abutment möglich ist.

Bezüglich der Eindrehelemente ist grundsätzlich die Anordnung von Vaterteil(en) am Grundkörper und Mutterteil(en) am Eindrehwerkzeug oder umgekehrt möglich, wobei die Ausführung mit Anordnung von Vaterteil(en) am Eindrehwerkzeug und Mutterteil(en) am Grundkörper bevorzugt ist.

Die Eindrehelemente können jeweils in Form einer Aussparung am Grundkörper und einer in die Aussparung eingreifenden Nase oder Vorsprung am Eindrehwerkzeug ausgebildet sein. Die Ausbildung der zwei bis sechs Aussparung(en) im Formschlussabschnitt am Grundkörper ist erfindungsgemäß. Die Aussparungen sind in Form von Mehrkantflächen an Grundkörper und Eindrehwerkzeug nach Art eines Innen-Außen-Paares als Dreikant, Vierkant oder Sechskant wie bei einem Inbus ausgebildet. Dabei ist die Ausbildung eines Innendreikantes am Grundkörper und die Ausbildung eines komplementären Außendreikantes am Eindrehwerkzeug besonders von Vorteil, da am Grundkörper umfangsmäßig zwischen den Innendreikantflächen abwechselnd drei Formschlusselemente angeordnet sein können, insbesondere als Federstege, die für den Formschluss mit den Nuten am Abutment ausgelegt sind.

Im Formschlussabschnitt können somit Aussparungen und Grundkörper-Abutment-Formschlusselemente, letztere als Verdrehsicherung, angeordnet sein, so dass im Formschlussbereich umfangsmäßig bevorzugt abwechselnd Eindrehelemente und Grundkörper-Abutment-Formschlusselemente vorgesehen sein können.

Am Grundkörper sind zwei bis sechs, besonders drei oder vier Innnenmehrkantflächen als Eindrehelemente und beispielhaft jeweils zwischen zwei Eindrehelementen ein Grundkörper-Formschlusselement vorgesehen. Am Abutment sind zu den Grundkörper-Formschlusselementen korrespondierende Formschlusselemente bevorzugt in einer Anzahl vorgesehen, die eine Ausrichtung des Abutments erlauben. Bei zwei, drei oder vier Grundkörper-Formschlusselementen am Grundkörper können so am Abutment passend beispielsweise genauso viele Formschlusselemente oder ein ganzzahliges Vielfaches davon wie vier, sechs, acht, neun oder mehr Formschlusselemente vorgesehen sein.

Eine bevorzugte Ausführungsform der Erfindung ist somit ein Einzelzahnimplantat für einen festsitzenden Zahnersatz, mit wie oben definierten Grundkörper, Abutment und Halteschraube, wobei Grundkörper und Abutment jeweils zueinander komplementäre Führungsabschnitt, Formschlussabschnitt und Endabschnitt aufweisen, wobei der Formschlussabschnitt zwei bis sechs Innenmehrkantflächen am Grundkörper für den Eingriff eines Eindrehwerkzeuges sowie, bevorzugt dazu alternierend, zwei bis sechs zueinander komplementäre Federstege als Formschlusselemente am Grundkörper und ebenso viele Nuten oder ein ganzzahliges Vielfaches davon als Formschlusselemente am Abutment aufweist. Im Formschlussabschnitt können die Eindrehelemente und die Federstege alternierend auf einer Ebene oder in zwei oder mehreren Ebenen im Formschlussabschnitt vorgesehen sein.

Dabei sind der Formschlussabschnitt des Grundkörpers und der Formschlussabschnitt des Abutments erfindungsgemäß in der Form so aufeinander abgestimmt, dass das Abutment in die Ausnehmung des Grundkörpers so eingesetzt werden kann, dass die jeweiligen Formschlusselemente miteinander in Eingriff gebracht werden können und so eine Bewegung in Umfangsrichtung verhindern. Die jeweiligen Formschlussabschnitte können als hohlkegelstumpfartige oder hohlzylindrische Bereiche der Ringausnehmung oder Bohrung, auch mit Abschnitten mit unterschiedlichen Durchmessern, im Grundkörper, und dazu jeweils korrespondierendem außenzylindrischem Abschnitt, oder Abschnitte, des Abutments gestaltet sein. Die folgende Beschreibung der Elemente der Erfindung gilt insoweit jeweils für alle Ausführungsformen, sofern nicht Gegenteiliges festgehalten ist.

Der Führungsabschnitt im Grundkörper schließt an den Gewindeabschnitt für die Haltschraube im apikalen Ende des Grundkörpers an. In koronaler Richtung dazu ist der Formschlussabschnitt angeordnet, in dem zwei bis sechs, besonders drei oder vier Eindrehelemente und besonders zwei, drei oder vier Grundkörper-Abutment-Formschlusselemente vorgesehen sind. Weiter in koronaler Richtung dazu ist der Endabschnitt angeordnet, in dem ein Dichtelement zwischen Grundkörper und Abutment vorgesehen sein kann. Das Dichtelement kann in Form einer elastischen Dichtung, die in einer Nut in einem von Grundkörper und Abutment angeordnet ist, ausgebildet sein.

Die axialen Längen von Führungsabschnitt, Formschlussabschnitt und Endabschnitt sind so bemessen, dass Führung und Formschluss gewährleistet sind und Grundkörper und Abutment gegeneinander, beispielsweise über einen Konus oder eine Dichtung, abgedichtet sind. Dabei können Führungsabschnitt und Endabschnitt jeweils länger als der Formschlussabschnitt sein. Die Summe der axialen Längen des Führungsabschnittes und des Formschlussabschnittes ist bevorzugt größer als die Länge des Endabschnittes. Die axiale Länge des Führungsabschnittes kann kleiner, gleich oder größer als die axiale Länge des Endabschnittes sein. Wenn der Führungsabschnitt länger ist als der Endabschnitt, hat der Führungsabschnitt die primäre Führungsfunktion.

Erfindungsgemäß erlauben die axial beiderseits des Formschlussabschnittes vorgesehenen und bevorzugt zylindrisch ausgeführten Abschnitte (Führungsabschnitt und Endabschnitt) eine zuverlässige und stabile Fixierung des Abutments im Grundkörper durch die Halteschraube, da Abutment und Grundkörper über Führungsabschnitt und Endabschnitt jeweils nach Art einer Rohr-in-Rohr-Lagerung gelagert sind. Die radialen Innendurchmesser von Führungsabschnitt und Endabschnitt im Grundkörper und demzufolge auch der Außendurchmesser im Abutment sind so gewählt, dass die Wandstärke im Grundkörper ausreichend ist, um bei lateraler oder winkliger Belastung des Implantates beim im Kiefer eingesetzten Implantat während des Kauvorganges Verformungen der Grundkörperwände zu vermeiden. So kann die Wandstärke des Grundkörpers im Bereich der Ringausnehmung von 30 bis 50% des Innendurchmessers im Führungsabschnitt und 10 bis 20% des Innendurchmessers im Endabschnitt betragen.

In einer erfindungsgemäßen Ausführungsform kann der Formschlussabschnitt des Grundkörpers als ein Hohlkegelstumpf ausgebildet sein. In diesem Fall ist der Formschlussabschnitt des Abutments als dem Hohlkegelstumpf korrespondierender Kegelstumpf ausgebildet.

In dieser Ausführungsform ist der Formschlussabschnitt des Grundkörpers als Hohlkegelstumpf mit einer Kreisfläche mit einem kleineren Durchmesser (Deckfläche) und mit einer Kreisfläche mit einem größeren Durchmesser (Grundfläche) ausgebildet, wobei die Längsachse des Hohlkegelstumpfes koaxial zur Längsachse des Grundkörpers angeordnet ist, die Kreisflächen den Hohlkegelstumpf begrenzen und die Kreisfläche mit dem größeren Durchmesser dem koronalen Ende des Grundkörpers zugewandt ist.

Aufgrund der erfindungsgemäßen Gestaltung des Grundkörpers mit den Eindrehelementen lässt sich der Grundkörper mittels eines an den Eindrehelementen eingreifenden Werkzeuges mit gegenüber den Ausführungen aus dem Stand der Technik erhöhtem Drehmoment in den Kieferknochen einschrauben, und das Abutment ist nach dem Einsetzen in den Grundkörper zuverlässig gegen ein Verdrehen gesichert.

Erfindungsgemäß sind die zueinander komplementären Formschlusselemente an Grundkörper und Abutment jeweils in Form einer Vaterteil-Mutterteil-Verbindung ausgebildet, wobei das/die Vaterteil(e) bevorzugt an dem Grundkörper angeordnet ist/sind. Aufgrund der so gewählten Anordnung ist infolge der Vermeidung einer Verringerung der Wandstärke des Grundkörpers auch bei keramischen Werkstoffen eine präzise Kraftübertragung möglich, die die Verwendung von voll-oder teilkeramischem Grundkörper und/oder Abutment, neben den bekannten Metallen und legierten Materialien, ermöglicht. Es ist aber ebenso möglich, dass das/die Vaterteil(e) an dem Formschlussabschnitt des Abutments und die korrespondierenden Mutterteile am Grundkörper angeordnet sind.

Erfindungsgemäß kann das Vaterteil-Formschlusselement jeweils die Form eines sich parallel zur Längsachse des Grundkörpers erstreckenden Federsteges haben, der in jeweils ein korrespondierendes Mutterteil am anderen Bauteil verdrehgesichert eingreift. Die Formschlusselemente können durch mechanische Bearbeitung wie Fräsen, Bohren etc. aus den Bauteilen Grundkörper und Abutment herausgearbeitet werden.

Der Formschlussabschnitt kann zylindrisch oder bevorzugt konisch ausgebildet sein. Bei einer zylindrischen Ausbildung ist der Formschlussabschnitt am Abutment in der Form eines zylindrischen Abschnittes ausgebildet, der mit seinem Außendurchmesser der hohlzylindrischen Bohrung am Grundkörper in der Länge und dem Durchmesser angepasst ist.

Bei der Ausführung der Formschlussabschnitte als Hohlkegelstumpf am Grundkörper und Kegelstumpf am Abutment kann der zumindest eine Federsteg so ausgeführt sein, so dass der Federsteg, je nach Anordnung am Grundkörper oder Abutment, um die Längsachse des Grundkörpers oder Abutments radial erhaben und dazu axial keilförmig in Richtung des größeren Durchmessers des Kegelstumpfes oder Hohlkegelstumpfes zuläuft und dabei den Durchmesser der den Kegelstumpf abschließenden größeren Kreisfläche nicht vergrößert. Die radiale Höhe des Federsteges entspricht somit maximal der Differenz der Radien der den Kegelstumpf, bzw. Hohlkegelstumpf abschließenden Kreisflächen abzüglich eines Spieles.

Ein solcher Federsteg kann erfindungsgemäß in Form eines jeweils in einer Blindbohrung (Haltebohrung) gehaltenen Stiftes ausgebildet sein, wobei die Blindbohrung koaxial zur Längsmittelachse des Grundkörpers im konischen Bereich von Hohlkegelstumpf oder Kegelstumpf, je nach relativer Lage von Vater- bzw. Mutterteil im Grundkörper oder im Abutment, bis in den Bereich parallel zum Gewindeabschnitt vorgesehen ist. Infolge der konischen Fläche an Hohlkegel, bzw. Kegelstumpf ist jeder Stift in einer Nut mit einem zu dem der Haltebohrung gegenüberliegenden Ende hin abnehmenden Querschnitt zumindest teilweise geführt, wobei sich eine Art Keilform des Federsteges ergibt. Um die Wandstärke im Formschlussabschnitt möglichst dick auszubilden, ist, je nach relativer Lage von Vater- bzw. Mutterteil im Grundkörpers oder im Abutment, die Blindbohrung zur Aufnahme des Stiftes oder Nut so angeordnet, dass die Bohrungsumfangslinie die Umfangslinie der Kreisfläche am apikalen Ende tangential berührt oder die Bohrung teilweise in der Kreisfläche am apikalen Ende angeordnet ist.

Die Stifte können jeweils einen, bevorzugt kreisförmigen, oder regelmäßig- oder unregelmäßig-polygonalen Querschnitt haben, von dem ein Querschnittssegment aus der Nut in der konischen Wandung radial zur Richtung der Längsmittelachse, je nach relativer Lage von Vater- bzw. Mutterteil, des Grundkörpers oder des Abutments, hervorsteht und bis über die maximale axiale Länge des Formschlussabschnittes den Federsteg ausbilden kann. In der einfachsten Form kann ein Stift eine zylindrische Form haben und beispielsweise in einer Drahtziehmaschine hergestellt sein. So ist es möglich, den Stift aus einem Material mit größerer Festigkeit als das Material für Abutment oder Grundkörper herzustellen.

Um den Stift axial zu sichern, kann jeder Stift in der Blindbohrung über eine Presspassung eingepasst/eingesteckt sein.

Erfindungsgemäß ist die Ausführungsform von besonderem Vorteil, bei der die Eindrehelemente und Formschlusselemente aus dem Grundkörper durch mechanische Bearbeitung wie Ausfräsen ausgebildet werden, und so die Innenmehrkantflächen und Federstege ausgebildet werden können.

Um die Einsetzbarkeit des Abutments in umfangsmäßig verschiedenen Positionen zu ermöglichen, können die Formschlusselemente bezüglich des Umfangs von Abutment und Grundkörper eine Winkelgrad-Teilung, die ein Einsetzen des Abutments in den Grundkörper in verschiedenen Positionen ermöglichen, wie eine 15, 30, 45, 60, 90, 120 oder 180 DEG-Teilung aufweisen. Weiterhin kann dabei die Anzahl der Mutterteil-Formschlusselemente gleich oder größer, beispielsweise je nach Unterteilung die doppelte oder dreifache Anzahl, als diejenige der Vaterteil-Formschlusselemente sein. Bevorzugt ist die Kombination von zwei Formschlusselementen am Grundkörper und zwei, vier oder sechs Formschlusselementen am Abutment, drei Formschlusselementen am Grundkörper und drei oder sechs Formschlusselementen am Abutment, oder vier Formschlusselementen am Grundkörper und vier Formschlusselementen am Abutment, wobei die Formschlusselemente jeweils regelmäßig über den Umfang beabstandet sind.

In einer erfindungsgemäßen Ausführungsform kann das Abutment im Formschlussabschnitt einen Auflagebund für die Stifte des Grundkörpers aufweisen. Beim Einsetzen des Abutments in den Grundkörper können die Stifte so mit ihrem jeweiligen koronalen Ende zumindest teilweise auf dem Auflagebund, dessen Breite maximal dem Durchmesser, besonders aber etwa dem Radius eines Stiftes entsprechen kann, aufliegen und beim Drehen des Abutments zur radialen Ausrichtung des Abutments gemäß den Vorgaben des Implantologen in die Formschlussnuten einrasten.

Wie oben erwähnt, kann abutmentseitig ein Dichtmittel wie ein O-Ring in einer umlaufenden Nut im Endabschnitt vorgesehen sein, um nach dem Einsetzen des Implantates beim Patienten ein Eindringen von Fremdkörpern und Flüssigkeit in Hohlräume des Implantates zu verhindern. Wenn erforderlich, kann zusätzlich oder alternativ ein Dichtmittel wie ein O-Ring auch in einer grundkörperseitigen Nut angeordnet sein, wobei letzteres weniger bevorzugt ist.

Für den/die Implantatpfosten/Halteschraube kann in der Blindbohrung apikal von dem Formschluss- und Zentrierabschnitt des Grundkörpers ein Innengewinde vorgesehen sein, wobei die Halteschraube das Abutment auch vollständig durchsetzen kann.

Weiterhin betrifft die Erfindung auch Grundkörper und Abutment als einzelne Bauteile des erfindungsgemäßen Implantates, die entsprechend den Ausführungsdetails für das Implantat insgesamt ausgebildet sind.

Es ist ein wesentlicher Aspekt der vorliegenden Erfindung, dass die Elemente für das Eindrehen des Implantates und die Formschlusselemente für die Festlegung der Position von Grundkörper und Abutment zueinander als Funktionselemente voneinander getrennt sind und die Formschlusselemente nicht auch für das Eindrehen des Grundkörpers in den Kiefer ausgelegt sind. Darüber hinaus ermöglicht die vorliegenden Erfindung, dass neben einer vereinfachten mechanischen Bearbeitung der Bauteile Grundkörper und Abutment, die jeweils mit korrespondierenden Formschlusselementen in Form der oben beschriebenen Nut-Feder-Verbindung in einem Zentrier- und Führungsbereich gefertigt sind, eine ausgewogene mechanische Stabilität bei der Einbringung des Implantates in den Kiefer und dessen Gebrauch beim Kauvorgang erzielt werden kann, die bei den im Stand der Technik bekannten Systemen so nicht gegeben ist. Dabei ist gleichzeitig gegenüber den im Stand der Technik bekannten Lösungen die Bearbeitung der Rohlinge von Grundkörper und Abutment wesentlich vereinfacht und kostengünstiger.

Nachstehend sind Ausführungsbeispiele des erfindungsgemäßen Einzelzahnimplantates und seiner Bauteile anhand der schematischen Zeichnungen im Einzelnen erläutert. Dabei zeigen:
Figuren 1 bis 5 eine erste Ausführungsform des erfindungsgemäßen Einzelzahnimplantates mit Grundkörper und Abutment;
Figuren 6 bis 10 eine zweite besonders bevorzugte Ausführungsform des erfindungsgemäßen Einzelzahnimplantates mit Grundkörper mit Innenmehrkant und Abutment; sowie
Figur 11 ein Ausführungsbeispiel eines Eindrehwerkzeuges zum Eindrehen eines Grundkörpers des erfindungsgemäßen Einzelzahnimplantates in den Kiefer.

### Genauer zeigen:

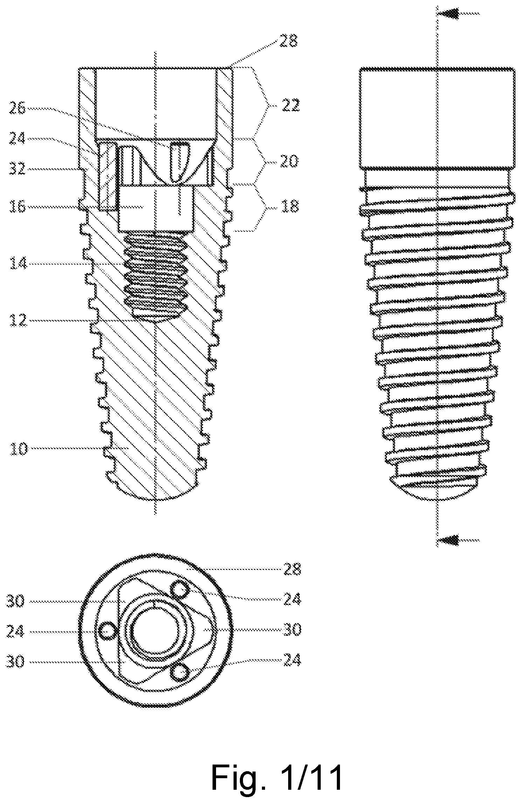

Fig. 1 im oberen Teil links ein Ausführungsbeispiel eines erfindungsgemäß bevorzugten Grundkörpers des enossalen Einzelzahnimplantates im axialen Längsschnitt entlang der in der Draufsicht rechts gezeigten Ebene, und im unteren Teil die Draufsicht auf den Grundkörper von oben;

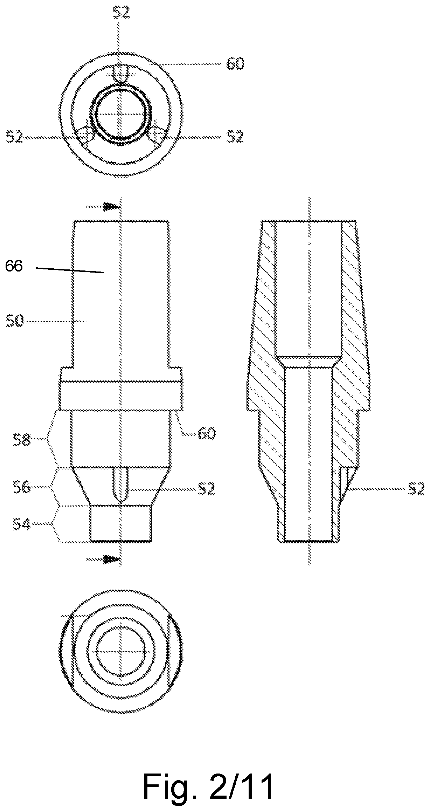

Fig. 2 eine Draufsicht auf ein Ausführungsbeispiel eines dem Grundkörper von Fig. 1 angepassten Abutments des Einzelzahnimplantates in einer Fig. 1 entsprechenden Darstellung, einen Längsschnitt in einer zur vorherigen Darstellung senkrechten Ebene sowie Draufsichten auf das Abutment von oben (unterhalb) und von unten (oberhalb);

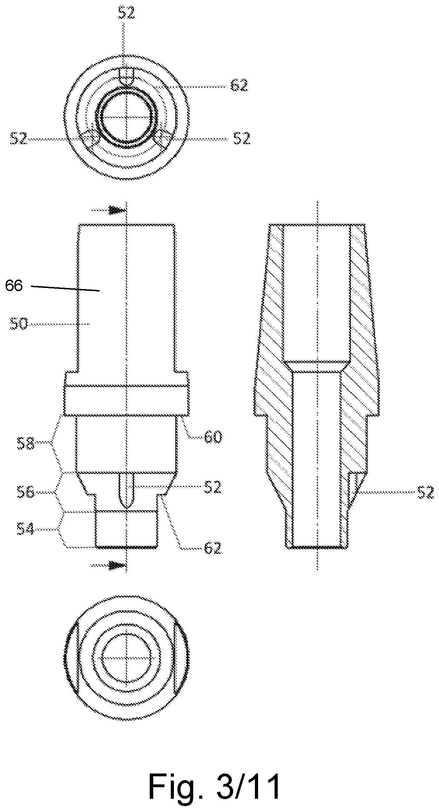

Fig. 3 eine Modifikation des in Fig. 2 gezeigten Ausführungsbeispiels eines Abutments des Einzelzahnimplantates in einer Fig. 1 entsprechenden Darstellung, einen Längsschnitt in einer zur vorherigen Darstellung senkrechten Ebene sowie Draufsichten auf das Abutment koronal von oben (unterhalb) und apikal von unten (oberhalb);

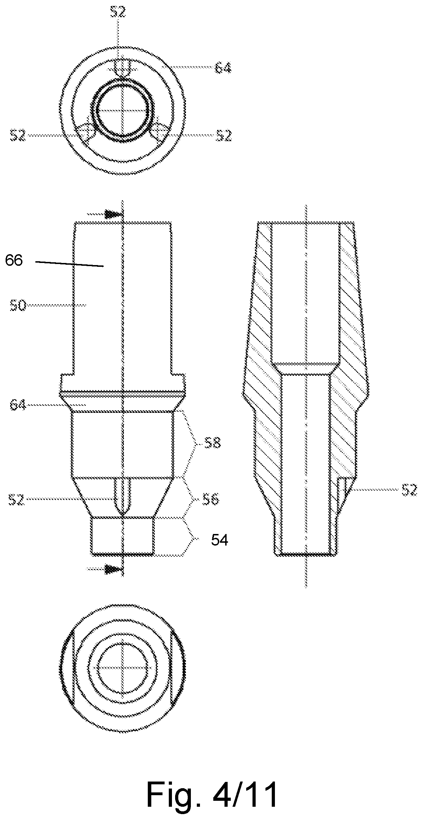

Fig. 4 eine weitere Modifikation des in Fig. 2 gezeigten Ausführungsbeispiels eines Abutments des Einzelzahnimplantates in einer Fig. 1 entsprechenden Darstellung, einen Längsschnitt in einer zur vorherigen Darstellung senkrechten Ebene sowie Draufsichten auf das Abutment von oben (unterhalb) und von unten (oberhalb);

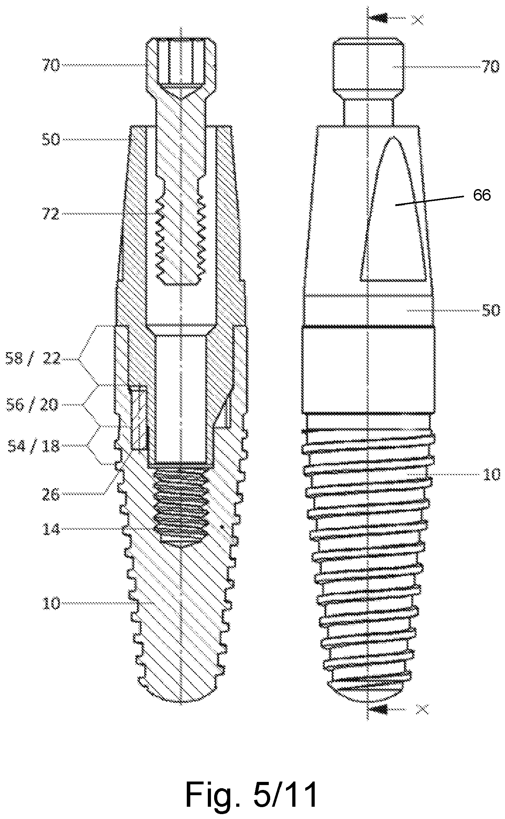

Fig. 5 ein Ausführungsbeispiel eines enossalen Einzelzahnimplantates nach der Erfindung im axialen Längsschnitt entlang der in der Draufsicht rechts gezeigten Ebene; und

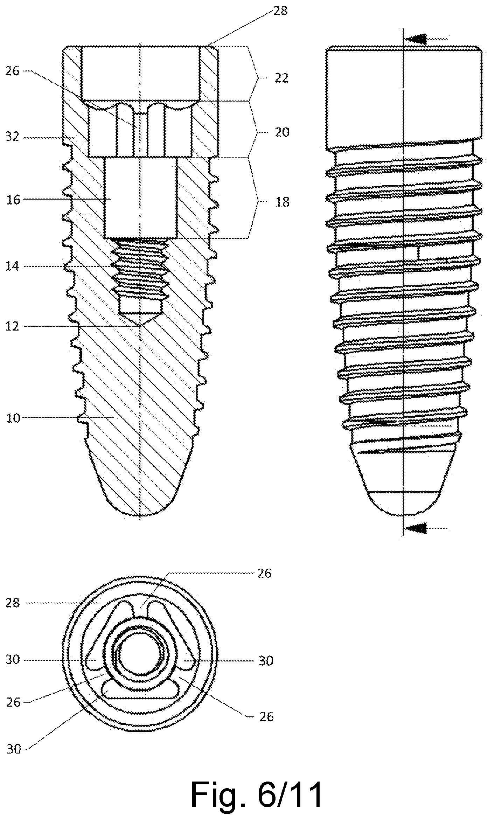

Fig. 6 im oberen Teil links ein Ausführungsbeispiel eines erfindungsgemäß bevorzugten Grundkörpers des enossalen Einzelzahnimplantates im axialen Längsschnitt entlang der in der Draufsicht rechts gezeigten Ebene, und im unteren Teil die Draufsicht auf den Grundkörper von oben;

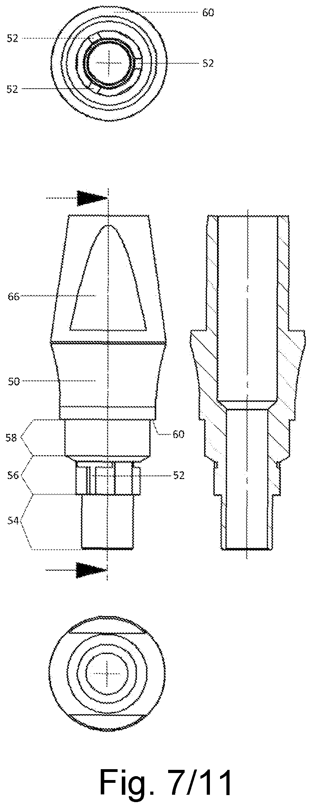

Fig. 7 eine Draufsicht auf ein Ausführungsbeispiel eines dem Grundkörper von Fig. 6 angepassten Abutments des Einzelzahnimplantates in einer Fig. 6 entsprechenden Darstellung, einen Längsschnitt in einer zur vorherigen Darstellung senkrechten Ebene sowie Draufsichten auf das Abutment von oben (unterhalb) und von unten (oberhalb);

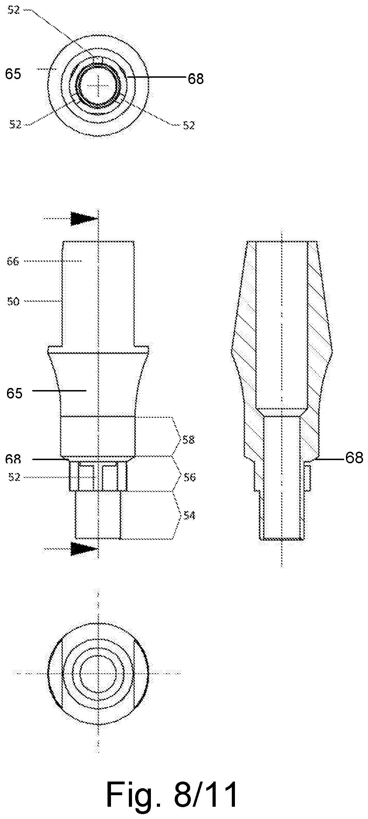

Fig. 8 eine Modifikation des in Fig. 7 gezeigten Ausführungsbeispiels eines Abutments des Einzelzahnimplantates in einer Fig. 6 entsprechenden Darstellung, einen Längsschnitt in einer zur vorherigen Darstellung senkrechten Ebene sowie Draufsichten auf das Abutment von oben (unterhalb) und von unten (oberhalb);

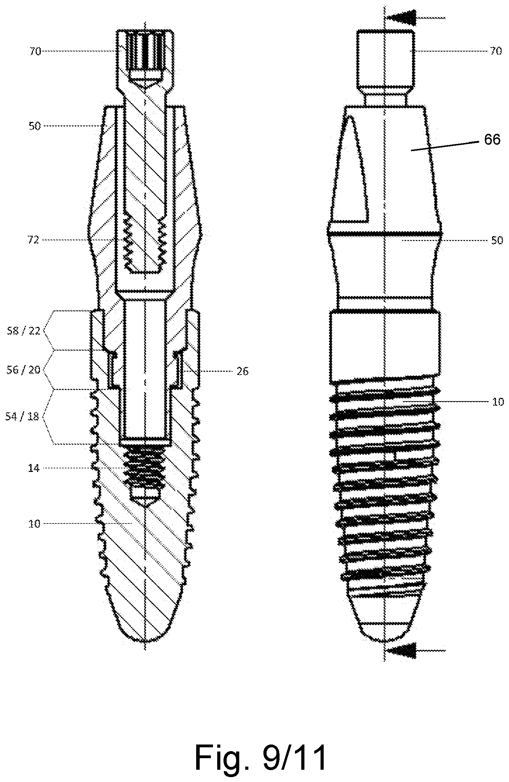

Fig. 9 ein bevorzugtes Ausführungsbeispiel eines enossalen Einzelzahnimplantates nach der Erfindung im axialen Längsschnitt entlang der in der Draufsicht rechts gezeigten Ebene; und

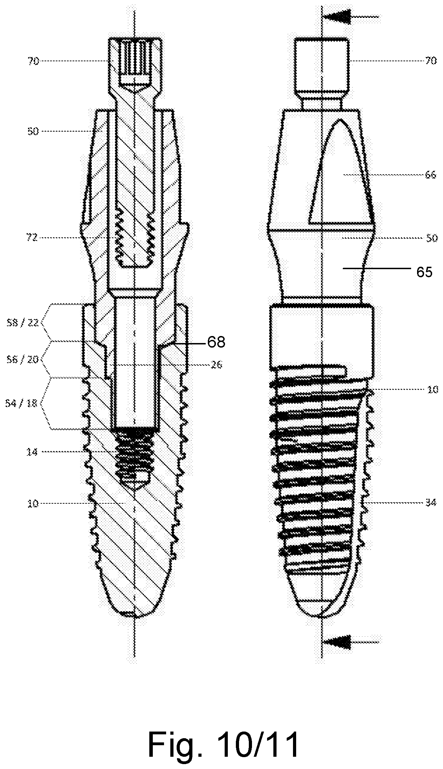

Fig. 10 ein weiteres bevorzugtes Ausführungsbeispiel eines enossalen Einzelzahnimplantates nach der Erfindung im axialen Längsschnitt entlang der in der Draufsicht rechts gezeigten Ebene; und

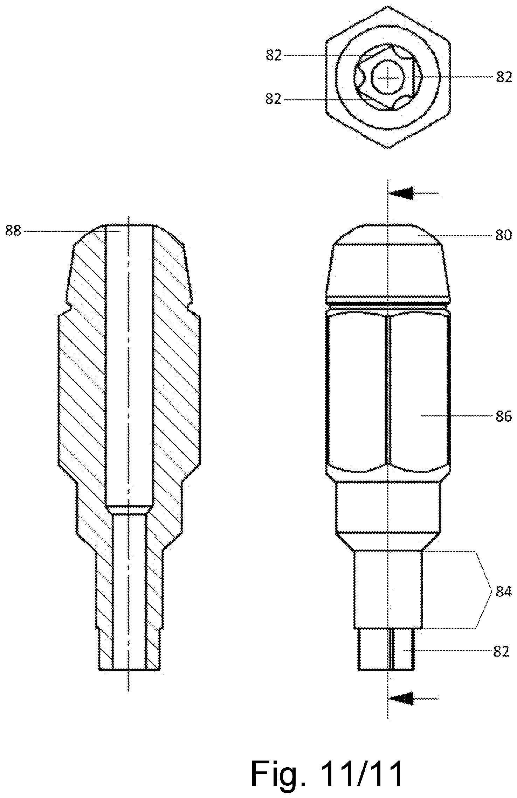

Fig. 11 links ein Ausführungsbeispiel eines Eindrehwerkzeuges im axialen Längsschnitt entlang der in der Draufsicht rechts gezeigten Ebene, und im oberen Teil die Draufsicht auf das Eindrehwerkzeug von unten.

Wie Fig. 1 zeigt, weist das Einzelzahnimplantat bei dem dort dargestellten Ausführungsbeispiel einen Grundkörper 10 auf, der an seinem in Fig. 1 unten gezeigten apikalen Ende geschlossen ausgebildet ist und eine zu seinem in Fig. 1 oben liegenden koronalen Ende hin offene Blindbohrung 12 mit einem Innengewinde 14 nahe dem apikalen Ende der Blindbohrung 12 aufweist. In das Innengewinde ist eine in Fig. 1 zeichnerisch nicht dargestellte Halteschraube 70 einschraubbar. An das Innengewinde 14 des Grundkörpers 10 schließt in koronaler Richtung eine hohlzylindrische Ringausnehmung 16 mit gegenüber dem Innengewinde 14 vergrößertem Innendurchmesser an. Die Ringausnehmung 16 weist in der dargestellten Form drei Bereiche (18; 20; 22) auf.

Dabei weist die Ringausnehmung 16 einen an das Innengewinde 14 koronal anschließenden Führungsabschnitt 18 auf. An den Führungsabschnitt 18 der Ringausnehmung 16 schließt sich in koronaler Richtung ein Formschlussabschnitt 20 an, der einen gegenüber dem Führungsabschnitt 18 sich in koronaler Richtung vergrößernden Innendurchmesser hat und eine konische Innenwandung mit - in der Ausführungsform gemäß Figur 1 - drei radial nach innen gerichteten Federstegen 26 aufweist. Die Federstege 26 sind zu den Formschlussnuten 52 an dem Abutment 50 nach Art einer Nut-Feder-Verbindung korrespondierend ausgebildet und können derart bemessen sein, dass sie sich über die gesamte axiale Länge des Formschlussabschnittes 20 erstrecken. Die Federstege 26 können durch maschinelle Bearbeitung aus dem Grundkörper ausgebildet sein. Es ist jedoch vorteilhaft auch möglich, die Federstege 26 dadurch auszubilden, dass im Formschlussabschnitt 20 Stifte 24 in gleichmäßig über den Umfang verteilten axialen Haltenutbohrungen gehalten werden. Eine Haltenutbohrung umfasst dabei eine Blindbohrung in der Wandung 32 des Führungsabschnittes 18 und eine Haltenut im Formschlussbereich 20. Dabei kann jeder der Stifte 24 mit an die Haltenutbohrung angepasstem Querschnitt, beispielsweise als Zylinderstift, so in die Blindbohrung der Haltenutbohrung in der Wandung 32 des Führungsabschnittes 18 eingesteckt und von der Haltenut im Formschlussbereich 20 radial teilweise umfasst gehalten sein, dass ein radial nach innen gerichteter Federsteg 26, der mit der Formschlussnut 52 des Abutments 50 korrespondiert, ausgebildet ist. Die Dicke eines Stiftes entspricht vorzugsweise etwa zwischen der Differenz, oder deren Hälfte, der Radien des Endabschnittes 22 und des Führungsabschnittes 18, abzüglich eines Spiels. So wird bereits bei Einführen des Abutments 50 in den Grundkörper 10 eine Führung über den Führungsabschnitt 18 zwischen den Stiften 24, vorzugsweise drei oder vier gleichmäßig über den Umfang verteilt, ermöglicht.

An den Formschlussabschnitt 20 schließt in koronaler Richtung ein Endabschnitt 22 mit einem koronalen Stirnrand 28 an. Der Endabschnitt 22 hat eine dem Außendurchmesser des Dichtabschnittes 58 des Abutments 50 korrespondierende Innenwandung. In dem Endabschnitt 22 kann an dem, dem Formschlussabschnitt 20 zugewandten Bereich ein Bund vorgesehen sein, an dem ein an dem Abutment vorgesehener Kragen zur Auflage kommen kann. Als Höhenanschlag für das Abutment kann auch der Stirnrand 28 für den Dichtkragen 60 des Abutments vorgesehen sein.

In dem Formschlussabschnitt 20 sind in Fig. 1 drei Aussparungen 30 als Eindrehelemente vorgesehen, in die die korrespondierenden Eindrehelemente 82 am in Fig. 6 gezeigten Eindrehwerkzeug 80 während des Eindrehvorganges des Grundkörpers 10 in den Kiefer eingreifen können.

Der Grundkörper 10 kann auf einfache Weise durch maschinelle Bearbeitung eines Rohlings hergestellt werden. Vorteilhaft dafür ist insbesondere die Ausgestaltung der Federstege als jeweils in einer Haltenutbohrung im Formschlussabschnitt 20 des Grundkörpers 10 angeordnete Zylinderstifte 24. So können vor Ausbildung des Formschlussabschnittes Bohrungen koaxial zur Blindbohrung 12 bis in die Wandung 32 im Führungsabschnitt 18 des Grundkörpers 10 gebohrt werden und beim Auffräsen des Formschlussabschnittes 20 mit einem Kegelfräser als Haltenutbohrungen im Formschlussabschnitt 20 und der Wandung 32 ausgebildet werden.

Obgleich die Verwendung von Zylinderstiften fertigungstechnisch vorteilhaft ist, ist es ebenso möglich, Stifte mit einem regelmäßigen oder unregelmäßigen polygonalen Querschnitt und entsprechend im Querschnitt angepasster Haltenutbohrung und angepasster Formschlussnut 52 zu verwenden.

Ein in Fig. 2 gezeigtes Abutment 50 dient über den Befestigungskopf 66 zur Befestigung für einen nicht gezeigten festsitzenden Zahnersatz. In Gebrauchsposition unterhalb des an den Stirnrand 28 des Grundkörpers 10 aufsetzbaren Dichtkragen 60 weist das Abutment 50 in apikaler Richtung einen Endabschnitt 58, der eine nicht dargestellte umlaufende Nut für die Aufnahme eines Dichtmittels wie eines nicht dargestellten O-Rings im Endabschnitt 58 aufweisen kann, einen Formschlussabschnitt 56 und einen Führungsabschnitt 54 auf. Im Formschlussabschnitt 56 sind eine Anzahl von axial verlaufenden Formschlussnuten 52 vorgesehen, die in ihrer Form und Anordnung, aber nicht notwendigerweise in ihrer Anzahl, den Federstegen 26 im Formschlussabschnitt 20 des Grundkörpers 10 entsprechen.

Beim Einsetzen des Abutments 50, das mit einer axialen Längsbohrung versehen ist, deren Innendurchmesser etwa dem Außendurchmesser der in Fig. 2 nicht gezeigten Halteschraube [(70) in Fig. 5] entspricht, in den Grundkörper 10 greift der Führungsabschnitt 54 in den Führungsabschnitt 18 der Ringausnehmung 16 ein, wobei die glatte Zylindermantelfläche des Führungsabschnittes 54 an der Innenzylindermantelfläche des Führungsabschnittes 18 des Grundkörpers 10 zur Anlage kommt.

Der Endabschnitt 58 des Abutments 50 kann mit Passsitz in dem Endabschnitt 22 des Grundkörpers 10 angeordnet sein. Die Federstege 26 greifen in die Formschlussnuten 52 ein, während der Dichtkragen 60 am Stirnrand 28 zur Anlage kommt. Damit ist das Abutment 50 dicht und formschlüssig verdrehgesichert zu dem Grundkörper 10 festgelegt.

Mittels der das Abutment 50 durchsetzenden Halteschraube 70, die mittels Gewinde 72 in das Innengewinde 14 des Grundkörpers 10 einschraubbar ist, lässt sich das Abutment 50 fest mit dem Grundkörper 10 verbinden. Um das Entfernen des Abutments 50 aus dem Grundkörper 10 zu erleichtern, kann in der das Abutment durchsetzenden Bohrung ein in Fig. 2 nicht dargestelltes Innengewinde vorgesehen sein, in das nach Entfernen der Halteschraube ein nicht dargestellter Abdrückpfosten mit Außengewinde einschraubbar ist, der sich mit seinem apikalen Ende am Innengewinde 14 des Grundkörpers abstützt. Beim Einschrauben des Abdrückpfostens wird das Abutment 50 dann aus dem Grundkörper 10 koronal angehoben und kann entnommen werden.

Je nach Teilung bzw. Teilungsverhältnis des Grundkörpers 10 bzw. des Abutments 50 lässt sich das Abutment 50 in unterschiedlichen Rotationsstellungen, beispielsweise in einer DEG-Teilung von 30°, 45°, 60°, 90°, 120° oder 180°, in den Grundkörper 10 einsetzen, wodurch dem behandelnden Arzt eine Anzahl von Gestaltungsmöglichkeiten zur Verfügung steht. Dabei kann die Anzahl der Abutment-Formschlusselemente 52 bevorzugt größer als diejenige der Grundkörper-Formschlusselemente 26 sein. So sind erfindungsgemäß Ausgestaltungen von zwei Federstegen 26 als Stifte 24 im Grundkörper 10 und zwei, vier oder sechs Formschlussnuten 52 am Abutment 50, oder besonders von drei Federstegen 26 als Stifte 24 im Grundkörper 10 und drei oder sechs, Formschlussnuten 52 am Abutment 50 vorteilhaft.

Die in Fig. 3 gezeigte Ausführungsform weist zusätzlich zu der in Fig. 2 gezeigten Form des Abutments 50 im Formschlussabschnitt 56 einen Auflagebund 62 für die im Ausführungsbeispiel gemäß Zeichnung als Stifte 24 ausgeführte Federstege 26 des Grundkörpers 10 auf. Beim Einsetzen des Abutments 50 in den Grundkörper 10 können die Federstege 26, hier als Stifte 24, so mit ihrem jeweiligen koronalen Ende zumindest teilweise auf dem Auflagebund 62, dessen Breite etwa dem Radius eines Stiftes 24 entsprechen kann, aufliegen und beim Drehen zur radialen Ausrichtung des Abutments gemäß den Vorgaben des Implantologen in die Formschlussnuten 52 einrasten. Bei dieser Ausführungsform können die Formschlussnuten 52 am Abutment 50 somit kürzer sein als die Federstege am Grundkörper 10.

Die in Fig. 4 gezeigte Ausführungsform des Abutments 50 weist anstelle des in Fig. 2 gezeigten Kragens 60 einen Konusbund 64 am Abutment 50 auf Bei dieser Ausführung kann das Abutment 50 bei komplementärer konischer Ausbildung des Stirnrandes 28 von Endabschnitt 22 des Grundkörpers 10 zur dichtenden Anlage von Grundkörper 10 und Abutment 50 in diesem Konusbereich angeordnet sein. Sowohl bei dieser Ausführungsform von Fig. 4 als auch bei der Ausführung des Abutments gemäß Fig. 2 und Fig. 3 ist es bevorzugt, dass die dichtenden Abschnitte in Anlage kommen, bevor Konusflächen im Formschlussbereich (20/56) von Grundkörper und Abutment in Anlage kommen, und somit ein geringes Spiel im Formschlussbereich vorhanden ist, so dass die Formschlusselemente miteinander in Eingriff kommen, die Konusflächen jedoch noch nicht anliegen.

Fig. 5 zeigt in der Draufsicht rechts ein in einen Grundkörper 10 eingesetztes Abutment 50 mit einer in die Bohrung des Abutments eingesetzten, aber noch nicht im Grundkörper festgeschraubten Halteschraube 70 und links das Ausführungsbeispiel des enossalen Einzelzahnimplantates gemäß der Erfindung im axialen Längsschnitt entlang der in der Draufsicht rechts gezeigten Ebene mit Grundkörper 10, Abutment 50 und Halteschraube 70 mit Gewinde 72, das in das Gewinde 14 des Grundkörpers 10 einschraubbar ist. Im Bereich des Dichtkragens, 60 des Grundkörpers bzw. des Konusbundes 64 kann auf dem Abutment und/oder dem Grundkörper außenseitig jeweils mindestens eine Markierung/Indexierung vorgesehen sein, die dem Implantologen eine Ausrichtung der Bauteile erleichtert und die Position der Formschlusselemente angibt.

Wie Fig. 6 zeigt, weist das Einzelzahnimplantat bei dem dort dargestellten bevorzugten Ausführungsbeispiel einen Grundkörper 10 auf, der an seinem in Fig. 1 unten gezeigten apikalen Ende geschlossen ausgebildet ist und eine zu seinem in Fig. 1 oben liegenden koronalen Ende hin offene Blindbohrung 12 mit einem Innengewinde 14 nahe dem apikalen Ende der Blindbohrung 12 aufweist. In das Innengewinde ist eine in Fig. 1 zeichnerisch nicht dargestellte Halteschraube 70 einschraubbar. An das Innengewinde 14 des Grundkörpers 10 schließt in koronaler Richtung eine hohlzylindrische Ringausnehmung 16 mit gegenüber dem Innengewinde 14 vergrößertem Innendurchmesser an. Die Ringausnehmung 16 weist in der dargestellten Form drei Bereiche (18; 20; 22) auf.

Dabei weist die Ringausnehmung 16 einen an das Innengewinde 14 koronal anschließenden Führungsabschnitt 18 auf. An den Führungsabschnitt 18 der Ringausnehmung 16 schließt sich in koronaler Richtung ein Formschlussabschnitt 20 an, der einen gegenüber dem Führungsabschnitt 18 koronal vergrößerten Innendurchmesser hat und eine konische Innenwandung mit - in der Ausführungsform gemäß Figur 1 - drei radial nach innen gerichteten Federstegen 26 aufweist. Die Federstege 26 sind zu den Formschlussnuten 52 an dem Abutment 50 nach Art einer Nut-Feder-Verbindung korrespondierend ausgebildet und können vorzugsweise derart bemessen sein, dass sie sich über die gesamte axiale Länge des Formschlussabschnittes 20 erstrecken. Die Federstege 26 können durch maschinelle mechanische oder elektrochemische Bearbeitung aus dem Grundkörper ausgebildet sein.

In dem Formschlussabschnitt 20 sind in Fig. 6 drei Innenkantflächen 30 als Eindrehelemente vorgesehen, in die die korrespondierenden Außenkantflächen 82 als Eindrehelemente am in Fig. 6 gezeigten Eindrehwerkzeug 80 während des Eindrehvorganges des Grundkörpers 10 in den Kiefer eingreifen können. Aus mechanischen und geometrischen Gründen ist die Verwendung von drei Innenkantflächen am Grundkörper 10 vorteilhaft, es können jedoch auch vier bis sechs Innenkantflächen vorgesehen sein, an denen die Außenkantflächen als Eindrehelemente 82 des Eindrehwerkzeuges 80 eingreifen, solange beim Einsetzen des Abutments 50 die Formschlusselemente an Grundkörper 10 und Abutment 50 zuverlässig in Eingriff gebracht werden können.

Ähnlich Fig. 2 dient das in Fig. 7 gezeigte Abutment 50 über den Befestigungskopf 66 zur Befestigung für einen nicht gezeigten festsitzenden Zahnersatz. In Gebrauchsposition unterhalb des an den Stirnrand 28 des Grundkörpers 10 aufsetzbaren Dichtkragen 60 weist das Abutment 50 in apikaler Richtung einen Endabschnitt 58, der eine nicht dargestellte umlaufende Nut für die Aufnahme eines Dichtmittels wie eines nicht dargestellten O-Rings im Endabschnitt 58 aufweisen kann, einen Formschlussabschnitt 56 und einen Führungsabschnitt 54 auf. Im Formschlussabschnitt 56 sind eine Anzahl von axial verlaufenden Formschlussnuten 52 vorgesehen, die in ihrer Form und Anordnung, aber nicht notwendigerweise in ihrer Anzahl, den Federstegen 26 im Formschlussabschnitt 20 des Grundkörpers 10 entsprechen. Im eingesetzten Zustand sind die Formschlussnuten 52 mit den Federstegen 26 in Eingriff, während die Eindrehelemente 30 am Grundkörper 10 ohne Kontakt zum Abutment 50 sind.

Beim Einsetzen des Abutments 50, das mit einer axialen Längsbohrung versehen ist, deren Innendurchmesser etwa dem Außendurchmesser der in Fig. 2 nicht gezeigten Halteschraube [(70) in Fig. 5 oder Fig. 9] entspricht, in den Grundkörper 10 greift der Führungsabschnitt 54 in den Führungsabschnitt 18 der Ringausnehmung 16 ein, wobei die glatte Zylindermantelfläche des Führungsabschnittes 54 an der Innenzylindermantelfläche des Führungsabschnittes 18 des Grundkörpers 10 zur Anlage kommt.

Der Endabschnitt 58 des Abutments 50 kann mit Paßsitz in dem Endabschnitt 22 des Grundkörpers 10 angeordnet sein. Die Federstege 26 greifen in die Formschlussnuten 52 ein, während der Dichtkragen 60 am Stirnrand 28 zur Anlage kommt. Damit ist das Abutment 50 dicht und formschlüssig verdrehgesichert zu dem Grundkörper 10 festgelegt.

Mittels der das Abutment 50 durchsetzenden Halteschraube 70, die in das Innengewinde 14 des Grundkörpers 10 einschraubbar ist, lässt sich das Abutment 50 fest mit dem Grundkörper 10 verbinden. Um das Entfernen des Abutments 50 aus dem Grundkörper 10 zu erleichtern, kann in der das Abutment durchsetzenden Bohrung ein in Fig. 2 nicht dargestelltes Innengewinde vorgesehen sein, in das nach Entfernen der Halteschraube ein nicht dargestellter Abdrückpfosten mit Außengewinde einschraubbar ist, der sich mit seinem apikalen Ende am Innengewinde 14 des Grundkörpers abstützt. Beim Einschrauben des Abdrückpfostens wird das Abutment 50 dann aus dem Grundkörper 10 koronal angehoben und kann entnommen werden.

Die in Fig. 8 gezeigte Ausführungsform des Abutments 50 mit Befestigungskopf 66 weist anstelle des in Fig. 7 gezeigten Kragens 60 am Abutment 50 einen konischen Bund 68 am Übergang zwischen Formschlussabschnitt 56 und Endabschnitt 58 am Abutment 50 auf. Bei dieser Ausführungsform liegt das Abutment 50 nicht wie bei der Ausführungsform der Fig. 7 über einen Kragen 60 auf dem Stirnrand 28 des Grundkörpers 10 auf, sondern ist über den konischen Bund 68 auf einem korrespondierenden konischen Abschnitt des Grundkörpers 10, wie dies in Fig. 10 dargestellt ist, abgestützt. Im Endabschnitt 58 kann bei dieser Ausführung vorzugsweise eine nicht dargestellte umlaufende Nut für die Aufnahme eines Dichtmittels wie eines nicht dargestellten O-Rings vorgesehen sein. Im Bereich des Stirnrandes 28 des Grundkörpers 10 bzw. des Dichtkragens 60 des Abutments 50, wie in den Figuren der einzelnen Bauteile gezeigt, kann außenseitig jeweils mindestens eine Markierung/Indexierung vorgesehen sein, die dem Implantologen eine Ausrichtung der Bauteile erleichtert und die Position der Formschlusselemente angibt.

Fig. 9 zeigt in der Draufsicht rechts ein in einen Grundkörper 10 eingesetztes Abutment 50, mit Befestigungskopf 66 und mit Dichtkragen 60 wie in Fig. 7 gezeigt, mit einer in die Bohrung des Abutments eingesetzten, aber noch nicht im Grundkörper festgeschraubten Halteschraube 70 und links das Ausführungsbeispiel des enossalen Einzelzahnimplantates gemäß der Erfindung im axialen Längsschnitt entlang der in der Draufsicht rechts gezeigten Ebene mit Grundkörper 10, Abutment 50 und Halteschraube 70 mit Gewinde 72, das in das Gewinde 14 des Grundkörpers 10 einschraubbar ist. Im Bereich des Stirnrandes 28 des Grundkörpers 10 bzw. des Dichtkragens 60 des Abutments 50, wie in den Figuren der einzelnen Bauteile gezeigt, kann außenseitig jeweils mindestens eine Markierung/Indexierung vorgesehen sein, die dem Implantologen eine Ausrichtung der Bauteile erleichtert und die Position der Formschlusselemente angibt.

Ähnlich Fig. 9 zeigt Fig. 10 in der Draufsicht rechts ein in einen Grundkörper 10 eingesetztes Abutment 50, ohne Dichtkragen 60 wie in Fig. 8 gezeigt, mit einer in die Bohrung des Abutments eingesetzten, aber noch nicht im Grundkörper festgeschraubten Halteschraube 70 und links das Ausführungsbeispiel des enossalen Einzelzahnimplantates gemäß der Erfindung im axialen Längsschnitt entlang der in der Draufsicht rechts gezeigten Ebene mit Grundkörper 10, Abutment 50 und Halteschraube 70 mit Gewinde 72, das in das Gewinde 14 des Grundkörpers 10 einschraubbar ist. Im Bereich des Stirnrandes 28 des Grundkörpers 10 bzw. des Konusabschnitts 65 des Abutments 50 kann außenseitig jeweils mindestens eine Markierung/Indexierung vorgesehen sein, die dem Implantologen eine Ausrichtung der Bauteile erleichtert und die Position der Formschlusselemente angibt. Bei dieser Ausführungsform ist das Abutment 50 über den konischen Bund 68 auf einem korrespondierenden Abschnitt des Grundkörpers 10 abgestützt. Wie bei allen erfindungsgemäßen Grundkörpern kann außenseitig am Grundkörper eine Spannut 34 vorgesehen sein, die bis über die apikale Spitze des Grundkörpers reicht und der Aufnahme und der Abführung von Knochenspänen und Gewebeteilen dient, die beim Eindrehen des Abutments in den Kiefer anfallen können.

Fig. 11 zeigt in der Draufsicht rechts ein in einen Grundkörper 10 einsetzbares Eindrehwerkzeug 80 mit drei Eindrehelementen wie Außenmehrkantflächen oder Nasen/Nocken 82, Werkzeugführungsabschnitt 84, der beim Eindrehen des Grundkörpers 10 in den Kiefer im Endabschnitt 22 des Grundkörpers 10 geführt ist, und Sechskant 86, an dem eine nicht dargestellte Knarre oder Winkelstück ansetzbar ist. Auf dem Eindrehwerkzeug, beispielsweise am oberen Ende des Werkzeugführungs-abschnittes 84, kann außenseitig ebenfalls mindestens eine Markierung/Indexierung vorgesehen sein, die dem Implantologen eine Ausrichtung des Eindrehwerkzeuges 80 zum Grundkörper erleichtert und die Position der Federstege 26 im Grundkörper 10 als auch der Außenmehrkantflächen 82 angibt. Um das Entfernen des Werkzeuges 80 aus dem Grundkörper 10 im Falle eines unwahrscheinlichen Verkantens zu erleichtern, kann in der das Eindrehwerkzeug 80 durchsetzenden Bohrung 88 ein in Fig. 10 nicht dargestelltes Innengewinde vorgesehen sein, in das nach Entfernen der Halteschraube ein nicht dargestellter Abdrückpfosten mit Außengewinde einschraubbar ist, der sich mit seinem apikalen Ende am Innengewinde 14 des Grundkörpers abstützt. Beim Einschrauben des Abdrückpfostens wird das Werkzeug 80 dann aus dem Grundkörper 10 koronal angehoben und kann entnommen werden.

### Bezugszeichenliste

- 10: Grundkörper
- 12: Bohrung
- 14: Innengewinde
- 16: Ringausnehmung
- 18: Führungsabschnitt
- 20: Formschlussabschnitt
- 22: Endabschnitt
- 24: Stift
- 26: Federsteg
- 28: Stirnrand
- 30: Eindrehelement/Aussparung/Innenkantfläche
- 32: Wandung
- 34: Spannut
- 50: Abutment
- 52: Formschlussnut
- 54: Führungsabschnitt
- 56: Formschlussabschnitt
- 58: Endabschnitt
- 60: Dichtkragen
- 62: Auflagebund
- 64: Konusbund
- 65: Konischer Abschnitt
- 66: Befestigungskopf
- 68: Konusbund
- 70: Halteschraube
- 72: Gewinde
- 80: Eindrehwerkzeug
- 82: Eindrehelement/Mehrkantfläche
- 84: Werkzeugführungsabschnitt
- 86: Sechskant
- 88: Innenbohrung

## Patentansprüche

1. Enossales Einzelzahnimplantat für einen festsitzenden Zahnersatz, mit
a. einem im Wesentlichen zylindrischen, in eine in einen Kieferknochen eingebrachte Bohrung einsetzbaren Grundkörper (10) mit einer Ringausnehmung (16), und mit einer zu seinem koronalen Ende hin offenen, apikal zu der Ringausnehmung (16) angeordneten Bohrung (12), die einen am apikalen Ende im Grundkörper angeordneten Gewindeabschnitt (14) zur Festlegung einer Halteschraube aufweist, wobei die Ringausnehmung (16) einen Führungsabschnitt (18), einen sich koronal an den Führungsabschnitt (18) anschließenden Formschlussabschnitt (20) und einen sich koronal an den Formschlussabschnitt (20) anschließenden Endabschnitt (22) umfasst,
b. einem in die Ausnehmung (16) des Grundkörpers einsetzbaren Abutment (50) mit einem Führungsabschnitt (54), mit einem Formschlussabschnitt (56), mit einem Endabschnitt (58), mit einer Bohrung zur Aufnahme der Halteschraube und mit einem Befestigungskopf (66) für den Zahnersatz, und
c. einer in die Bohrung des Grundkörpers (10) einsetzbaren und das Abutment durchsetzenden Halteschraube (70),
wobei der Formschlussabschnitt (20) des Grundkörpers (10) und der Formschlussabschnitt (56) des Abutments (50) in der Form zueinander komplementär sind,
wobei der Formschlussabschnitt (20) des Grundkörpers (10) mindestens ein in Umfangsrichtung wirkendes Grundkörper-Formschlusselement (26) aufweist und der Formschlussabschnitt (56) des Abutments (50) mindestens ein zu dem Grundkörper-Formschlusselement (26) komplementäres Abutment-Formschlusselement (52) aufweist,
wobei das Abutment (50) in die Ringausnehmung (16) des Grundkörpers (10) so einsetzbar ist, dass die jeweiligen Formschlusselemente (26; 52) miteinander in Eingriff gebracht werden,
**dadurch gekennzeichnet, dass**
die zueinander komplementären Formschlusselemente (26; 52) in Form von zwei bis sechs radial nach innen gerichteten Federstegen (26), die zu den Formschlussnuten (52) am Abutment (50) nach Art einer Nut-Feder-Verbindung korrespondierend ausgebildet sind, ausgebildet sind und
dass zusätzlich zu den zueinander komplementären Formschlusselementen (26; 52) zwei bis sechs in Umfangsrichtung wirkende Eindrehelemente (30) in Form einer Innenmehrkantfläche für den Eingriff eines Eindrehwerkzeuges in dem Formschlussabschnitt (20) des Grundkörpers (10) vorgesehen sind.

2. Einzelzahnimplantat nach Anspruch 1, bei dem drei oder vier in Umfangsrichtung wirkende Eindrehelemente (30) jeweils in Form einer Innenmehrkantfläche im Grundkörper (10) ausgebildet sind.

3. Einzelzahnimplantat nach Anspruch 1 oder 2, bei dem die in Umfangsrichtung wirkenden Eindrehelemente (30) jeweils umfangsmäßig alternierend mit den Formschlusselementen im Grundkörper (10) ausgebildet sind.

4. Einzelzahnimplantat nach einem der vorhergehenden Ansprüche, bei dem der Formschlussabschnitt (20) des Grundkörpers (10) als Hohlkegelstumpf ausgebildet ist, wobei die Längsachse des Hohlkegelstumpfes koaxial zur Längsachse des Grundkörpers ist, und das Abutment (50) einen dem Hohlkegelstumpf korrespondierenden Kegelstumpf aufweist, oder
bei dem der Formschlussabschnitt (20) des Grundkörpers (10) als Hohlzylinder ausgebildet ist, wobei die Längsachse des Hohlzylinders koaxial zur Längsachse des Grundkörpers ist, und das Abutment (50) einen dem Hohlzylinder korrespondierenden außenzylindrischen Abschnitt aufweist.

5. Einzelzahnimplantat nach einem der vorhergehenden Ansprüche, wobei der Federsteg (26) jeweils in Form eines aus dem Grundkörperrohling mechanisch oder elektrochemisch abtragend ausgebildeten Steges ausgebildet ist.

6. Einzelzahnimplantat nach Anspruch 4, wobei der Federsteg (26) in Form eines in einer Bohrung oder Nut gehaltenen Stiftes (24) ausgebildet ist.

7. Einzelzahnimplantat nach einem der vorangehenden Ansprüche, wobei die zueinander komplementären Formschlusselemente bezüglich des Umfangs des Grundkörpers und des Abutments eine aufeinander abgestimmte Winkelgrad-Teilung aufweisen.

8. Einzelzahnimplantat nach einem der vorangehenden Ansprüche, wobei die Anzahl der Mutterteil-Formschlusselemente größer ist als diejenige der Vaterteil-Formschlusselemente.

## Claims

1. Enossal single tooth implant for a fixed dental prosthesis, with
a. a substantially cylindrical base body (10), which can be inserted into a bore made in a jaw bone and which has an annular recess (16), and a bore (12) which is open towards its coronal end and arranged apically in relation to the annular recess (16), which has a threaded portion (14) arranged at the apical end in the base body for fixating a retaining screw, whereby the annular recess (16) comprises a guide section (18), a positive-locking section (20) adjoining the guide section (18) in coronal direction and an end section (22) adjoining the positive-locking section (20) in coronal direction,
b. an abutment (50), which can be inserted into the recess (16) of the base body and having a guide section (54), a positive-locking section (56), an end section (58), a bore for receiving the retaining screw and a fastening head (66) for the dental prosthesis, and
c. a retaining screw (70), which can be inserted into the bore of the base body (10) and penetrates the abutment,
whereby the positive-locking section (20) of the base body (10) and the positive-locking section (56) of the abutment (50) are complementary to each other in the mold,
whereby the positive-locking section (20) of the base body (10) has at least one base body positive-locking element (26), which acts in circumferential direction, and the positive-locking section (56) of the abutment (50) has at least one abutment positive-locking element (52), which is complementary to the base body positive-locking element (26),
whereby the abutment (50) can be inserted into the annular recess (16) of the base body (10) such that the respective positive-locking elements (26; 52) engage with one another,
**characterized in that**
the mutually complementary positive-locking elements (26; 52) are in the form of two to six radially inwardly directed spring webs (26), which are designed to correspond to the positive-locking grooves (52) on the abutment (50) in the manner of a tongue-and-groove connection, and
**in that**, in addition to the mutually complementary positive-locking elements (26; 52), two to six screw-in elements (30) acting in the circumferential direction are provided in the form of an internal polygonal surface for the engagement of a screw-in tool in the positive-locking section (20) of the base body (10).

2. Single-tooth implant of Claim 1, in which three or four screw-in elements (30) acting in the circumferential direction are each in the form of an internal polygonal surface in the base body (10).

3. Single-tooth implant of Claim 1 or 2, in which the screw-in elements (30) acting in the circumferential direction are in each case formed circumferentially alternating with the positive-locking elements in the base body (10).

4. Single-tooth implant of one of the preceding claims, in which the positive-locking section (20) of the base body (10) is formed as a hollow truncated cone, the longitudinal axis of the hollow truncated cone being coaxial with the longitudinal axis of the base body, and the abutment (50) having a truncated cone corresponding to the hollow truncated cone, or
in which the positive-locking section (20) of the base body (10) is in the form of a hollow cylinder, the longitudinal axis of the hollow cylinder being coaxial with the longitudinal axis of the base body, and the abutment (50) having an outer cylindrical section corresponding to the hollow cylinder.

5. Single-tooth implant of one of the preceding claims, wherein the spring web (26) is in the form of a web which is mechanically or electrochemically ablated from the base body blank.

6. Single-tooth implant of Claim 4, whereby the spring web (26) is in the form of a pin (24) held in a bore or groove.

7. Single-tooth implant of one of the preceding claims, whereby the complementary positive-locking elements have a coordinated pitch angle division in relation to the circumference of the base body and the abutment.

8. Single-tooth implant of any of the preceding claims, whereby the number of female positive-locking elements is greater than that of the male positive-locking elements.

## Revendications

1. Implant dentaire individuel placé à l'intérieur d'un os pour une prothèse dentaire fixe, avec
a. une structure de base (10) essentiellement cylindrique qui peut être inséré dans un trou percé dans une mâchoire avec un évidement annulaire (16), et avec un trou (12) ouvert à son extrémité coronale et disposé de manière apicale par rapport à l'évidement annulaire (16), le trou présentant une partie filetée (14) disposée à l'extrémité apicale dans la structure de base pour fixer une vis de retenue, l'évidement annulaire (16) comprenant une partie de guidage (18), une section à fermeture positive (20) connectée de manière coronale à la partie de guidage (18) et une section finale (22) connectée de manière coronale à la section de fermeture positive (20),
b. un pilier (50) qui peut être inséré dans l'évidement (16) de la structure de base avec une partie de guidage (54), avec une section à fermeture positive (56), avec une section finale (58), avec un trou pour la réception de la vis de retenue et avec une tête de fixation (66) pour la prothèse dentaire, et
c. une vis de retenue (70) qui peut être insérée dans le trou de la structure de base (10) et traversant le pilier,
la section à fermeture positive (20) de la structure de base (10) et la section à fermeture positive (56) du pilier (50) étant complémentaires l'un à l'autre dans la forme,
la section à fermeture positive (20) de la structure de base (10) présentant au moins un élément d'ajustement de forme (26) de la structure de base agissant dans la direction périphérique et la section à fermeture positive (56) du pilier (50) présentant au moins un élément d'ajustement de forme (52) du pilier complémentaire à l'élément d'ajustement de forme (26) de la structure de base,
le pilier (50) pouvant être inséré dans l'évidement annulaire (16) de la structure de base (10) de telle manière que les éléments d'ajustement de forme (26 ; 52) respectifs s'engagent,
**caractérisé en ce que**
les éléments d'ajustement de forme (26 ; 52) complémentaires l'un à l'autre sont formés sous la forme de deux à six barrettes à ressort (26) orientées de manière radiale vers l'intérieur qui sont formées de manière correspondante aux rainures d'ajustement de forme (52) sur le pilier (50) selon la nature d'une connexion rainure-ressort, et
**que** sont prévus en plus des éléments d'ajustement de forme (26 ; 52) complémentaires l'un à l'autre deux à six éléments vissés (30) agissant dans la direction périphérique sous la forme d'une surface intérieure polygonale pour l'engagement d'un outil de vissage dans la section à fermeture positive (20) de la structure de base (10) .

2. Implant dentaire individuel selon la revendication 1 dans lequel sont formés trois ou quatre éléments vissés (30) agissant dans la direction périphérique, respectivement sous la forme d'une surface intérieure polygonale dans la structure de base (10).

3. Implant dentaire individuel selon la revendication 1 ou 2 dans lequel sont formés les éléments vissés (30) agissant dans la direction périphérique, respectivement alternant de manière périphérique avec les éléments d'ajustement de forme dans la structure de base (10).

4. Implant dentaire individuel selon une des revendications précédentes dans lequel est formée la section à fermeture positive (20) de la structure de base (10) comme tronc de cône creux, l'axe longitudinal du tronc de cône creux étant coaxial à l'axe longitudinal de la structure de base, et le pilier (50) présentant un cône tronqué correspondant au tronc de cône creux, ou
où est formé la section à fermeture positive (20) de la structure de base (10) comme cylindre creux, l'axe longitudinal du cylindre creux étant coaxial à l'axe longitudinal de la structure de base, et le pilier (50) présentant une section cylindrique à l'extérieur correspondant au cylindre creux.

5. Implant dentaire individuel selon une des revendications précédentes dans lequel la barrette ressort (26) est formée respectivement sous la forme d'une passerelle formée à enlever mécaniquement ou électrochimiquement de la structure de base brute.

6. Implant dentaire individuel selon la revendication 4 dans lequel la barrette ressort (26) est formée sous la forme d'une tige (24) maintenue par un trou ou une rainure.

7. Implant dentaire individuel selon une des revendications précédentes dans lequel les éléments d'ajustement de forme complémentaires l'un à l'autre concernant l'étendue de la structure de base et du pilier présentent une division angulaire coordonnée.

8. Implant dentaire individuel selon une des revendications précédentes dans lequel le nombre d'éléments d'ajustement de forme de la partie femelle est plus grand que celui des éléments d'ajustement de forme de la partie mâle.
